Europäisches Patentamt

European Patent Office

Office européen des brevets

(11) Publication number: **0 195 925 B1**

# EUROPEAN PATENT SPECIFICATION

(45) Date of publication of patent specification: **03.06.92**   (51) Int. Cl.⁵: **H04N 1/40**

(21) Application number: **86102032.9**

(22) Date of filing: **18.02.86**

(54) **Method for converting image gray levels.**

(30) Priority: **29.03.85 JP 64021/85**

(43) Date of publication of application:
**01.10.86 Bulletin 86/40**

(45) Publication of the grant of the patent:
**03.06.92 Bulletin 92/23**

(84) Designated Contracting States:
**DE FR GB**

(56) References cited:
**EP-A- 0 096 219**
**US-A- 4 194 221**

**PATENT ABSTRACTS OF JAPAN, vol. 4, no. 109 (E-20)[591], 6th August 1980; & JP-A-55 66 174**

(73) Proprietor: **International Business Machines Corporation**
**Old Orchard Road**
**Armonk, N.Y. 10504(US)**

(72) Inventor: **Asano, Hideo**
**353-5 Ohokura-machi**
**Machida-shi Tokyo-to(JP)**
Inventor: **Kanzaki, Eisuke**
**B-101 Heights Watauchi 283-6 Watauchi**
**Fujisawa-shi Kanagawa-ken(JP)**

(74) Representative: **Blakemore, Frederick Norman**
**IBM United Kingdom Limited Intellectual Property Department Hursley Park**
**Winchester Hampshire SO21 2JN(GB)**

**Description**

The invention relates to a method and an arrangement for converting gray levels of a document image into binary signals in accordance with the preamble of claim 1.

Electronic images in digital form are often required for automatic processing and storing of documents. The signals representing the various tone or gray levels of the picture elements (pels) are produced by a CCD (Charge Coupled Device) sensor array. The CCD sensor array is arranged to sense reflected light from the document and includes a plurality of small CCD elements arranged in a line. Each CCD element defines one pel of the document image. The signals from the CCD Sensor array are supplied to a compare circuit and are compared with a threshold level. Depending upon whether the signal exceeds the threshold level, a signal of one level (e.g. binary 1) or a signal of the other level (binary 0) is produced for each pel, whereby the document image is represented by the bi-level or binary signals. The bi-level signals can then be compressed by a known compression algorism.

The images scanned at the CCD scanning station are classified into a soft toned image and a hard toned image. The example of the soft toned image is a photograph in which the tone continuously changes through the real white level, the gray level and the real black level. The example of the hard toned image is a text image printed by black ink on a white paper.

Occasionally, a document includes the both soft toned image and hard toned image. In this case, a switching of the threshold level applied to the compare circuit is required. More particularly, a fixed threshold level is selected for the hard toned image or text image, while variable threshold levels are selected for the soft toned image or photographic image. To distinguish between the hard toned image and the soft toned image, the examined published Japanese patent application JP-A-59-15549 discloses a threshold switching system in which a written mark is provided on a left side margin of a document, which indicates the presence of the hard toned image on the right of the mark. In this system, a scan control unit is required to detect if the mark is written in the left side margin, and to switch the threshold from thresholds for the soft toned image to a threshold for the hard toned image. Also, an operator is required to mark on the left side margin before setting the document in the system.

Japanese Patent Application No. JP-A-55 66 174 and European Patent Application No. EP-A-0 096 219 each describe apparatus and a method for converting gray levels of image pels of a document into binary signals. The method includes storing the gray levels of a predetermined number of pels. A distribution characteristic of the stored gray levels is determined to detect whether or not the image represented by the predetermined number of pels is a soft toned image or a hard toned image. In JP-A-55 66 174, a threshold value is selected for the stored gray levels in response to the detection. The gray levels are then compared with the selected threshold value to produce a binary signal for each gray level.

US Patent No. US-A-4,194,221 also describes apparatus and a method for converting gray levels of image pels of a document into binary signals. The method includes storing the gray levels of a predetermined number of pels. Autocorrelation processing of the stored gray levels determines whether or not the image represented by the predetermined number of pels is a soft toned image or a hard toned image. A threshold value for the stared gray levels is selected in response to the detection. The gray levels are then compared with the selected threshold value to produce a binary signal for each gray level.

It is therefore the object of the present invention to provide a method and an arrangement of the aforementioned kind that adapt the conversion threshold automatically to arbitrary documents.

In accordance with the present invention, there is provided a method for converting gray levels of image pels of a document into binary signals, the method comprising: storing the gray levels of a predetermined number of pels, determining a distribution characteristic of the stored gray levels to detect whether or not the image represented by the predetermined number of pels is a soft toned image or a hard toned image; the method being characterised in that the predetermined number of pels represent a rectangle of MxN pels, N and M both being integers wherein N is smaller than the total number of pels in the horizontal direction of the document and M is smaller than the total number of pels in the vertical direction of the document; and in that it further comprises: selecting a single threshold value for the stored gray levels if a hard toned image is detected, or selecting a plurality of dither threshold values for the stored gray levels if a soft toned image is detected; and comparing the gray levels with the selected threshold value or dither threshold values to produce a binary signal for each gray level.

Viewing the present invention from a second aspect, there is provided apparatus for converting gray levels of image pels of a document into binary signals comprising an electro optical scanning device, a buffer store, a compare circuit, characterised in that the apparatus further comprises: a M x N buffer store receiving N pels of each of M scanned document lines, M and N being integers, a distribution discriminator for determining a distribution characteristic of gray levels for M x N pels contained in the M x N pel buffer store to detect whether or not the image represented by the M x N pels is a soft toned image or a hard toned image; and, a threshold selector responsive to input signals from the distribution discriminator to select a single threshold value for the compare circuit if a hard toned image is detected, or a plurality of dither threshold values for the stored gray levels if a soft toned image is detected, the compare circuit comparing the gray levels of the M x N pels with the selected single threshold value or dither threshold values to produce a binary signal for each gray level.

The invention does not require the preliminary marking by the operator; it automatically determines if an image being scanned or captured by the CCD sensor array is the hard toned image or the soft toned image and selects the threshold for converting the pel signals to the bi-level signals.

The document is scanned by the CCD sensor array, so that signals, each of which represents white, gray or black level of each pel of an image on the document, are produced by the CCD sensor array. A window is set which has a size of N pels × M pels, wherein N is an integer and is smaller than the total pels in the horizontal direction of the document, and M is an integer and is smaller than the total pels in the vertical direction of the document. The window defines a partial image of the entire image of the document and is moved from the left edge to the right edge of the document to complete one scan along the horizontal direction, and is moved back to the left edge to scan the next pel lines.

The partial image represented by the N × M pels is supplied to a distribution discriminator, which determines a distribution characteristics (histogram) of the signal or gray levels of the N × M pels to detect whether or not the partial image is the soft toned image or the hard toned image. Threshold for the soft toned image and threshold for the hard toned image are stored in a memory. One of the two thresholds is selected and supplied to a compare circuit in accordance with the detection. At this point of time, the signals of the N × M pels are compared with said selected threshold by the compare circuit, which produces binary signals depending upon whether the signal level exceeds the threshold level, or not.

An embodiment of the invention is now described in detail with reference to the drawings where:

Figure 1 shows a circuit diagram for performing the process operation in accordance with the present invention;

Figure 2 shows plural pel groups of a document;

Figure 3 shows a model distribution characteristic curve for the hard toned image;

Figure 4 shows a model distribution characteristic curve for the soft toned image;

Figures 5, 6, 7 and 8 show alternative model distribution characteristic curves wherein the level difference between two adjacent pels in the pel group is represented in the horizontal axis, and frequencies are represented in the vertical axis, and

Figure 9 shows the model curve for explaining the variance.

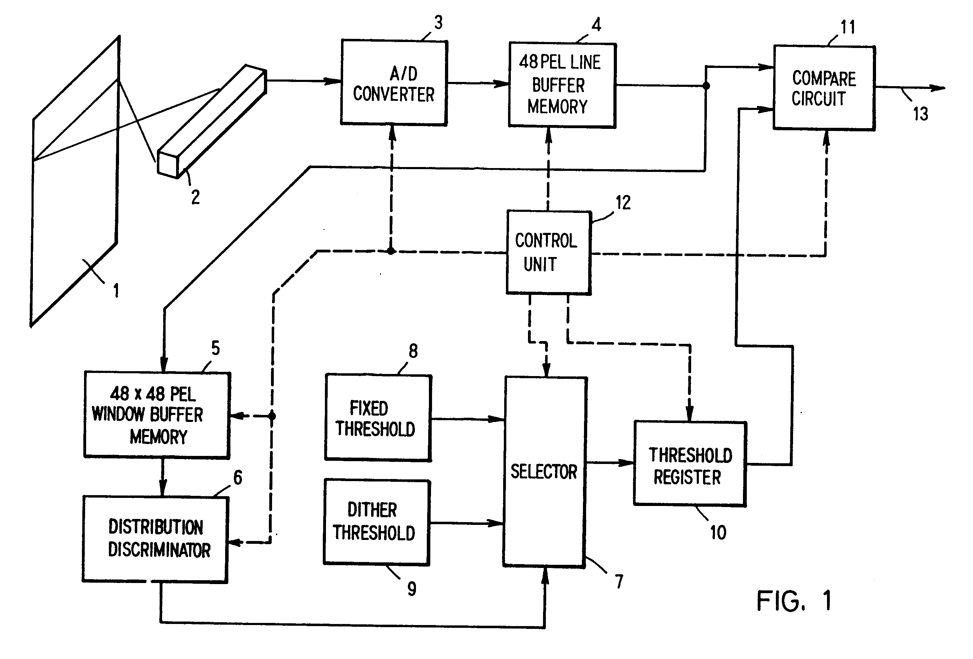

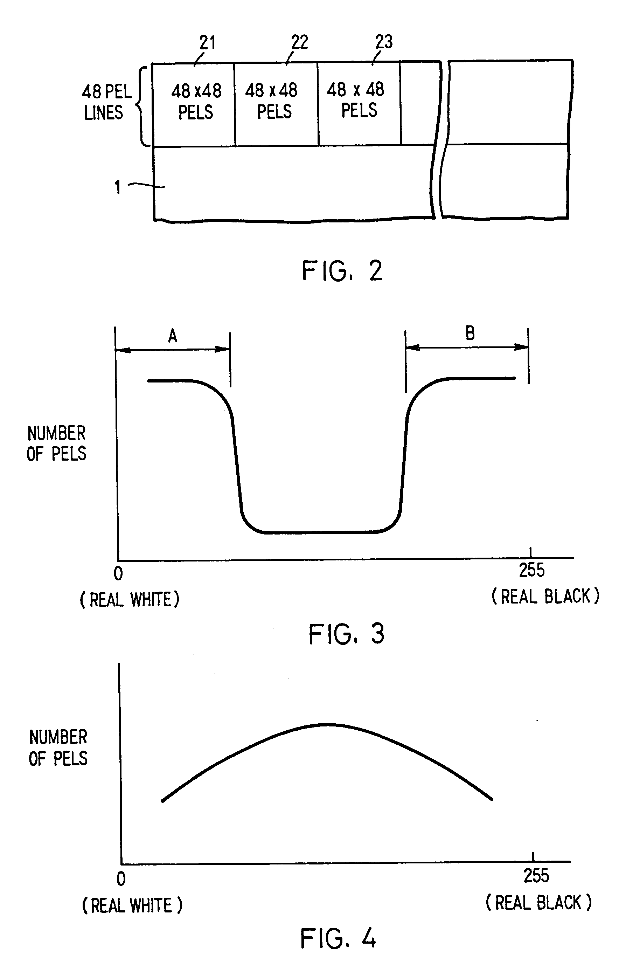

Referring to Figure 1, a document 1 is relatively moved with respect to a CCD sensor array 2. The CCD sensor array 2 has plural CCD elements aligned in a line with a density of 8 elements/mm. A light source, not shown, is positioned to direct light to the document. The reflected light from an image of the document is detected by the CCD sensor array. One CCD element defines one pel and produces a signal representing white, gray or black level of the pel of the image. The image of the document is continuously scanned by the CCD sensor array as both are relatively moved. The signals of the pels are processed by an amplifier, not shown, and the processed signals are applied to an A/D converter 3 by which an analog signal for each pel is converted to eight bit digital signal. The digital signals of 48 scan lines, i.e. 48 pel lines shown in the Figure 2, are stored in 48 pel lines buffer memory 4. A window of 48 pels × 48 pels is used to sequentially sample and process plural 48 × 48 pel groups, e.g. 21, 22, 23, etc., as shown in the Figure 2. It is assumed to process the 48×48 pel group 21. The 48 × 48 pel group 21 is temporarily stored in a 48 × 48 pel window buffer memory 5. The 48×48 pels of the group 21 are supplied to a distribution discriminator 6, by which distribution characteristics of the 48 × 48 pels are determined to detect whether or not the partial image represented by the 48 × 48 pels is the soft toned image or the hard toned image. The model distribution characteristics of the hard and soft toned images are shown in the Figures 3 and 4, respectively. Since a level of one pel is represented by the eight bits, as stated above, the number of levels represented in the horizontal axis is "256". The vertical axis represents the number of pels. The level of each of the 48 × 48 pels, i.e. 2304 pels, is determined and plotted in the histogram. In the model histogram of the hard toned image, i.e. text image on the paper of the Figure 3, most of pels are distributed in the ranges A and B. The pels in the range A are the background pels of the white paper, and the pels in the range B are the pels of the text characters. In the model histogram of the soft toned image, i.e., continuously toned image such as photographic of the Figure 4, the pels are distributed over the entire levels. It is noted that the histogram of the hard toned image of the Figure 3 apparently differs from the histogram of the soft toned image of the Figure 4. The distribution discriminator 6 compares the actually plotted distribution of the image of the document characteristics with the models of the Figures 3 and 4 to

3

determine whether the actual distribution is that of the hard toned image or the soft toned image. Depending upon the result of the determination, one of a fixed threshold and dither thresholds is selected by a selector 7. The fixed threshold 8 is used for the hard toned image to convert the signal representing the level of each pel to the bi-level signal, while the dither thresholds 9, i.e. dither matrix, are used for the soft toned image i.e. the photographic image. The use itself of the fixed and dither thresholds is well known in the art, hence the details are not described in the specification. The selected threshold is hold in the threshold register 10, and is applied to one input of the compare circuit 11. At this point of time, the 48 × 48 pel group 21 stored in the 48 pel line buffer memory 4 is supplied to the compare circuit 11 under the control of the control unit 12, and the 48 × 48 pels of the group 21 are compared with the selected threshold, which is stored in the threshold register 10. If the level of pel represented by the eight bits exceeds the threshold level, the compare circuit 11 produces one, e.g. "1", of the bi-level signals on its output line 13. If the level of pel is lower than the threshold level, the compare circuit 11 produces the other signal, e.g. "0", of the bi-level signals on the output line 13. In this manner, each of the signals of the 48 × 48 pels is converted to the bi-level signal. The bi-level signals are supplied to utility circuit, such as a data compression circuit, a data transmission line, etc.

The operation proceeds to process the second group 22 stored in the 48 pel line buffer memory 4. That is, the second 48 × 48 pel group 22 defined by the window is supplied to the buffer memory 5. The distribution characteristics of the group 22 is determined, as stated above, and the appropriate threshold is selected. At this point of time, the second group 22 in the memory 4 is supplied to the compare circuit 11 along with the selected threshold, so that the bi-level signals of this 48 × 48 pel group 22 are produced on the output line 12. In this manner, the successive groups in the 48 pel lines are sequentially processed, and the process proceeds to the next 48 pel lines.

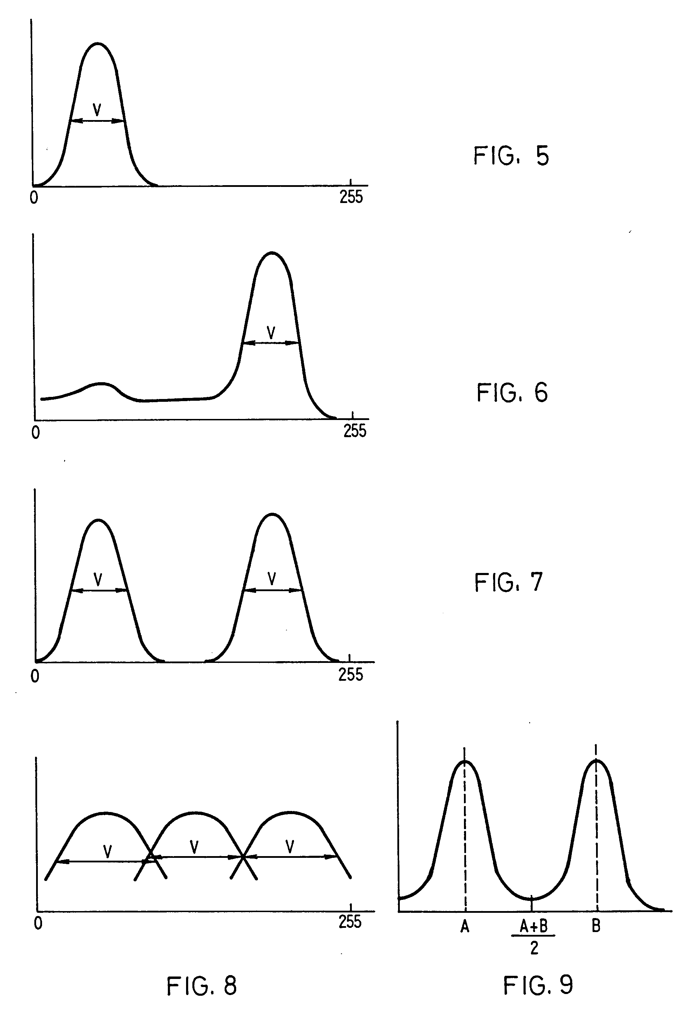

The Figures 5, 6, 7 and 8 show alternative model curves for determining the type of image of the document, i.e. the hard toned image or the soft toned image. In this case, the difference between the level of one pel and the level of the next pel is measured. The measurement of the level difference between two neighborhood pels is made for the 48 × 48 pels. In the Figures 5 - 8, the vertical axis represents the frequency of the level difference occurred in the 48 × 48 pels, and the horizontal axis represents the level differences.

The frequencies of level differences between the two pels of one 48 × 48 pel group such as 21 are measured and compared with the model curves of the Figures 5 - 8. More particularly, the model curve of the Figure 5 shows that all of the level differences between two pels are distributed in the low range. It means that the 48 × 48 pel group being discriminated has no image. The group does not include any contrast produced by the text image and the photographic image. That is, the Figure 5 shows only the substantially uniform background tone. The Figure 6 shows that most of the level differences are distributed in the high range. It means that many level differences of high value exist in the 48 × 48 pels, in other words, the 48 × 48 pels include the hard toned image or the text image. The Figure 7 shows that two peaks exist in the low and high ranges. It means that a text image exists in the substantially uniform background tone. The Figure 8 shows relatively wide three peaks. The wide peak represents the soft toned image such as photographic image. Also, the Figure 8 shows the mix of low contrast, medium contrast and high contrast in the 48 × 48 pel image. It is noted that the model curves in the Figures 5 - 7 have the substantially same variance "V", while the model curves in the Figure 8 have a wider variance "V". The variance indicates a width of the curve at half value of the peak. The variance for the sampled data is calculated for each mountain like portion. It is assumed that a sample shown in Figure 9, for example, is obtained. The mountain like portions are separated at a middle point between the tops of the portions, and a statistical calculation for each mountain like portion is made to obtain the variance.

The following formula is used for the calculation of the variance.

$$\text{Variance} = \frac{1}{n-1} \sum_{i=1}^{h} (x_i - \bar{x})^2 f_i$$

Wherein;

$\bar{x}$:   Mean

$x_i$:   Class mark (actually, difference of levels)

h:   The number of classes

n:   The number of pels

4

$f_i$:     Frequency

The model curves for determining the type of image for each group could be replaced by the model curves shown in the Figures 5 - 8. The variance "V" of the actually plotted curve for each $48 \times 48$ pel group is compared with the variances of model curves to determine the type of image, i.e. hard or soft toned image. And, the fixed threshold is selected for the hard toned image, and the dither threshold is selected for the soft toned image.

**Claims**

1.   Method for converting gray levels of image pels of a document into binary signals, the method comprising:

 storing the gray levels of a predetermined number of pels,

 determining a distribution characteristic of the stored gray levels to detect whether or not the image represented by the predetermined number of pels is a soft toned image or a hard toned image;

 the method being characterised in that the predetermined number of pels represent a rectangle of MxN pels, N and M both being integers wherein N is smaller than the total number of pels in the horizontal direction of the document and M is smaller than the total number of pels in the vertical direction of the document;

 and in that it further comprises

 selecting a single threshold value for the stored gray levels if a hard toned image is detected, or selecting a plurality of dither threshold values for the stored gray levels if a soft toned image is detected; and

 comparing the gray levels with the selected threshold value or dither threshold values to produce a binary signal for each gray level.

2.   The method of Claim 1, wherein the distribution characteristic is determined by making a histogram of the gray levels and determining whether the histogram is classified into a model established for said soft toned image or said hard toned image.

3.   The method of one of the claims 1 or 2, wherein the histogram is determined with respect of gray level differences between neighbouring pels.

4.   The method of claim 2 or 3, wherein the variance of histogram peaks is evaluated.

5.   Apparatus for converting gray levels of image pels of a document into binary signals comprising an electro optical scanning device (2), a buffer store (4), a compare circuit (11),

 characterised in that the apparatus further comprises:

 a M x N buffer store (5) receiving N pels of each of M scanned document lines, M and N being integers,

 a distribution discriminator (6) for determining a distribution characteristic of gray levels for M x N pels contained in the M x N pel buffer store (5) to detect whether or not the image represented by the fl x N pels is a soft toned image or a hard toned image; and

 a threshold selector (7-10) responsive to input signals from the distribution discriminator (6) to select a single threshold value for the compare circuit (11) if a hard toned image is detected, or a plurality of dither threshold values for the stored gray levels if a soft toned image is detected, the compare circuit (11) comparing the gray levels of the M x N pels with the selected single threshold value or dither threshold values to produce a binary signal for each gray level.

**Revendications**

1.   Procédé pour transformer des niveaux de gris d'éléments d'image ou pixels d'un document en signaux binaires, le procédé comprenant :

 la mémorisation des niveaux de gris d'un nombre prédéterminé de pixels, et

 la détermination d'une caractéristique de répartition des niveaux de gris mémorisés, pour détecter si l'image représentée par le nombre prédéterminé de pixels est une image à faible contraste ou une image à fort contraste ;

 le procédé étant caractérisé en ce que le nombre prédéterminé de pixels représente un rectangle de MxN pixels, N et M étant tous deux des entiers, N étant plus petit que le nombre total de pixels dans la direction horizontale du document et M étant plus petit que le nombre total de pixels dans la direction verticale du document ;

et en ce qu'il comprend en outre :

la sélection d'une valeur de seuil unique pour les niveaux de gris mémorisés si une image à fort contraste est détectée, ou la sélection d'une pluralité de valeurs de seuil variables pour les niveaux de gris mémorisés si une image à faible contraste est détectée ; et

la comparaison des niveaux de gris avec la valeur de seuil choisie ou avec les valeurs de seuil variables choisies, afin de produire un signal binaire pour chaque niveau de gris.

2. Procédé suivant la revendication 1, dans lequel la caractéristique de répartition est déterminée par création d'un histogramme des niveaux de gris et détermination de la classification de l'histogramme suivant un modèle établi pour ladite image à faible contraste ou un modèle établi pour ladite image à fort contraste.

3. Procédé suivant une des revendications 1 ou 2, dans lequel l'histogramme est déterminé avec référence aux différences de niveau de gris entre pixels voisins.

4. Procédé suivant la revendication 2 ou 3, dans lequel on évalue la variance des pics de l'histogramme.

5. Appareil pour la transformation des niveaux de gris des éléments d'image ou pixels d'un document en signaux binaires, comprenant un dispositif d'analyse électro-optique (2), une mémoire tampon (4) et un circuit de comparaison (11),

caractérisé en ce que l'appareil comprend en outre :

une mémoire tampon M x N (5) qui reçoit N pixels de chacune de M lignes du document analysé, M et N étant des entiers ,

un discriminateur de répartition (6) pour déterminer une caractéristique de répartition des niveaux de gris pour les M x N pixels contenus dans la mémoire tampon (5) de M x N pixels, afin de déecter si l'image représentée par les M x N pixels est une image à faible contraste ou une image à fort contraste ; et

un sélecteur de seuil (7-10) qui répond à des signaux d'entrée venant du discriminateur de répartition (6) de manière à choisir une valeur de seuil unique pour le circuit de comparaison (11) si une image à fort contraste est détectée, ou une pluralité de valeurs de seuil variables pour les niveaux de gris mémorisés si une image à faible contraste est détectée, le circuit de comparaison (11) comparant les niveaux de gris des M x N pixels avec la valeur de seuil unique choisie ou avec les valeurs de seuil variables choisies pour produire un signal binaire pour chaque niveau de gris.

**Patentansprüche**

1. Verfahren zum Umwandeln von Graupegeln von Bildelementen für ein Bild bei einem Dokument in binäre Signale, wobei das Verfahren folgendes umfaßt:

Speichern der Graupegel einer vorbestimmten Anzahl von Bildelementen,

Bestimmen einer Verteilungskennlinie der gespeicherten Graupegel, um zu erfassen, ob das durch die vorbestimmte Anzahl von Bildelementen repräsentierte Bild ein weich getöntes Bild oder ein hart getöntes Bild ist,

wobei das Verfahren dadurch gekennzeichnet ist, daß die vorbestimmte Anzahl von Bildelementen ein Rechteck mit MxN Bildelementen repräsentiert, wobei sowohl N als auch M eine ganze Zahl ist, bei welchen N kleiner ist als die gesamte Anzahl von Bildelementen in der horizontalen Richtung des Dokuments und M kleiner ist, als die gesamte Anzahl von Bildelementen in der vertikalen Richtung des Dokuments und daß dieses ferner folgendes umfaßt:

Auswählen eines einzelnen Schwellenwerts für die gespeicherten Graupegel, falls ein hart getöntes Bild erfaßt wird, oder Auswählen einer Mehrzahl von Schwellenwerten des Schwankens für die gespeicherten Graupegel, falls ein weich getöntes Bild erfaßt wird und

Vergleichen der Graupegel mit dem ausgewählten Schwellenwert oder den Schwellenwerten des Schwankens, um ein binäres Signal für jeden Graupegel zu erzeugen.

2. Verfahren nach Anspruch 1, bei welchem die Verteilungskennlinie durch Erstellen eines Histogramms der Graupegel und eine Bestimmung bestimmt wird, ob das Histogramm in einem für das weich getönte Bild oder das hart getönte Bild festgelegten Modell klassifiziert ist.

3. Verfahren nach einem der Ansprüche 1 oder 2, bei welchem das Histogramm bezüglich Graupegelunterschieden zwischen benachbarten Bildelementen bestimmt wird.

4. Verfahren nach Anspruch 2 oder 3, bei welchem die Varianz der Histogrammhöchstwerte berechnet wird.

5. Einrichtung zum Umwandeln von Graupegeln von Bildelementen für ein Bild bei einem Dokument in binäre Signale, mit einer elektrooptischen Abtasteinrichtung (2), einem Pufferspeicher (4) und einer Vergleicherschaltung (11) dadurch gekennzeichnet, daß die Einrichtung ferner folgendes aufweist:
einen MxN Pufferspeicher (5), der N Bildelemente jeder von M abgetasteten Dokumentzeilen empfängt, wobei M und N ganze Zahlen sind,
einen Verteilungsdiskriminator (6) zum Bestimmen einer Verteilungskennlinie von Graupegeln für MxN Bildelemente, die in dem Pufferspeicher (5) für MxN Bildelemente enthalten sind, um zu erfassen, ob das durch die MxN Bildelemente repräsentierte Bild ein weich getöntes Bild oder ein hart getöntes Bild ist und
einen Schwellenselektor (7-10), der auf Eingangssignale aus dem Verteilungsdiskriminator (6) anspricht, um folgendes auszuwählen: einen einzelnen Schwellenwert für die Vergleicherschaltung (11), falls ein hart getöntes Bild erfaßt wird, oder eine eine Mehrzahl von Schwellenwerten des Schwankens für die gespeicherten Graupegel, falls ein welch getöntes Bild erfaßt wird, wobei die Vergleicherschaltung (11) die Graupegel der MxN Bildelemente mit dem ausgewählten einzelnen Schwellenwert oder den Schwellenwerten des Schwankens vergleicht, um ein binäres Signal für jeden Graupegel zu erzeugen.

FIG. 1

FIG. 2

FIG. 3

FIG. 4

FIG. 5

FIG. 6

FIG. 7

FIG. 8

FIG. 9